# EUROPÄISCHE PATENTSCHRIFT

(11) **EP 2 030 665 B1**
(45) Veröffentlichungstag und Bekanntmachung des Hinweises auf die Patenterteilung: **01.10.2014**
(21) Anmeldenummer: 08161769.8
(22) Anmeldetag: 05.08.2008
(51) Int. Cl.: B01D 46/00, B01D 46/10, B01D 46/52

(54) **Filterelement**
Filter element
Elément de filtre

(30) Priorität: 17.08.2007 DE 202007011586 U
(43) Veröffentlichungstag der Anmeldung: 04.03.2009
(73) Patentinhaber: MANN+HUMMEL GmbH, 71638 Ludwigsburg (DE)
(72) Erfinder: Ammersdörfer, Micha, 70327 Stuttgart (DE)

(56) Entgegenhaltungen:
- EP-A- 0 490 169
- EP-A- 0 692 294
- EP-A- 0 891 801
- EP-A- 1 431 090
- DE-A1- 4 430 333
- DE-A1- 10 135 690
- DE-A1- 10 135 691
- DE-A1- 10 235 407
- DE-A1- 19 859 618
- DE-C1- 19 532 436
- FR-A- 2 852 529

## Beschreibung

### Technisches Gebiet

Die vorliegende Erfindung betrifft ein Filterelement, insbesondere einen Innenraumfilter zum Filtern von Luft für den Innenraum eines Kraftfahrzeugs. Ferner betrifft die Erfindung ein Herstellungsverfahren für ein solches Filterelement.

Ein entsprechendes Filterelement dient der Filterung von Fluidströmungen oder gasförmigen Medien, beispielsweise zur Filterung einer Luftströmung, die dem Fahrzeuginnenraum eines Kraftfahrzeugs zugeführt wird. Obwohl auf beliebige Filterelemente anwendbar, wird die vorliegende Erfindung sowie die ihr zugrunde liegende Problematik nachfolgend für ein Filterelement zur Filterung von Luft für den Innenraum eines Kraftfahrzeugs beschrieben. Solche Filter werden nachfolgend auch kurz als Kfz-Innenraumluftfilter oder auch Innenraumfilter bzw. Kabinenluftfilter bezeichnet.

Die zunehmende Luftverunreinigung, insbesondere in Großstädten, in Verbindung mit dem Einsatz moderner Klimaanlagen macht es wünschenswert und auch erforderlich, die von außen in den Innenraum eines Kraftfahrzeuges geleitete und aufbereitete bzw. klimatisierte Luft mittels geeigneter Filter zu reinigen. Hierfür kommen beispielsweise Partikelfilter, Geruchsfilter oder deren Kombination miteinander in Betracht, die in der Luft enthaltene Schwebstoffe, Partikel und Gerüche aus der Umgebungsluft möglichst gut herausfiltern bzw. absorbieren sollen. Solche Filter zur Filterung von Luft für den Innenraum eines Kraftfahrzeuges sind in einer Vielzahl von Ausführungsformen und Varianten allgemein bekannt, sodass auf deren Aufbau und Funktionsweise nachfolgend nur kurz eingegangen wird.

Da die Wirksamkeit von Filtern insbesondere von der Größe der von der Luft durchströmten Oberfläche des Filters abhängig ist, kommen für Kfz-Innenraumluftfilter überwiegend zickzackförmig gefaltete Filtermedien, die auch als plissierte Filtermedien bezeichnet werden, zum Einsatz. Durch die Faltung des verwendeten Filtermediums kann abhängig von der Faltungshöhe, dem Faltungsabstand und dem Grad des Zusammenstauchens dieser ziehharmonikaähnlichen Filterpacks der verschiedenen Faltabschnitte des Filtermediums eine Vergrößerung der von dem Luftstrom durchströmten Filterfläche ermöglicht werden. Um entsprechende Filterelemente mit zickzackförmig gefalteten Filtermedien insbesondere montagetechnisch besser handhaben zu können, sind oft Verstärkungselemente an den Seiten des Filterelementes entlang dem Filterpack aus dem gefalteten Medium vorgesehen. Diese Armierungselemente dienen der seitlichen Fixierung und Stabilisierung des zickzackförmigen Filtermediums und sind mittels eines geeigneten Klebers an den seitlichen Kanten des Faltenpacks angebracht. Das Filterelement mit an den gefalteten Längsseiten streifenförmig angebrachten Armierungen oder Verstärkungen kann auf diese Weise montagetechnisch einfach ohne es zu beschädigen in ein Gehäuse eines Filtermoduls bzw. einer entsprechenden Filteraufnahme, beispielsweise in ein Filtergehäuse oder eine Klimaanlage eines Kraftfahrzeuges, eingefügt werden.

### Stand der Technik

Ähnliche Filterelemente sind z.B. in dem europäischen Patent EP 1 309 386 B1 beschrieben.

Neben der Notwendigkeit der Stabilität der Filterelemente oder Filtereinsätze müssen diese auch an den Randbereichen zu den entsprechenden Gehäusen dicht abschließen, damit die zu filternde Luft weitestgehend durch das Filtermedium bzw. das Faltenpack strömt und nicht daran vorbeiströmt. Umlaufende Schienen oder seitlich abstehende Führungsmittel sind ferner notwendig, um das jeweilige Filterelement auf einer Öffnung umlaufende Auflagefläche zu legen oder in eine passende Aufnahme- oder Gehäuseöffnung zu schieben. In dem vorgenannten europäischen Patent ist beispielsweise ein aus Kunststoff gespritzter flexibler Rahmen um das Faltenpack offenbart, um den Filter in eine passende Aufnahmeöffnung, beispielsweise des Fahrzeugs, hineinzuschieben.

Es ist ferner gewünscht, dass diese Filterelemente neben der einfachen montagetechnischen Handhabbarkeit möglichst auch kostengünstig sein sollten und damit insbesondere möglichst einfach zu produzieren sind. Dabei ist es auch wünschenswert, möglichst wenig Filtermaterial, wie z. B. Filtervlies, einzusetzen und die Herstellung in wenigen Schritten zu vollziehen.

Die DE 195 32 436 C1, die DE 198 59 618 A1 und die DE 102 35 407 A1 zeigen verschiedene Möglichkeiten der Bildung von Führungsabschnitten an Seitenbändern auf, die an den Faltenbalg angebracht wurden. Die EP 0 692 294 A1 offenbart die Ausbildung eines Führungsabschnitts, der integral mit dem Faltenbalg verbunden ist.

Vor diesem Hintergrund liegt der vorliegenden Erfindung die Aufgabe zugrunde, ein verbessertes Filterelement zu schaffen, dass einfach herstellbar ist und ein Mittel zum kontrollierten Einschieben in eine geeignete Aufnahmeöffnung aufweist.

### Offenbarung der Erfindung

Diese Aufgabe wird durch ein Filterelement mit den Merkmalen des Patentanspruchs 1 gelöst.

Demgemäß ist ein Filterelement vorgesehen, ein Innenraumfilter für ein Kraftfahrzeug, mit einem Faltenpack und einem Seitenband. Das Seitenband umläuft mindestens teilweise das Faltenpack und weist ein thermisch verformbares Seitenbandmaterial auf. Es ist mindestens ein seitlich von dem Filterelement abstehender Führungsabschnitt aus thermisch verformtem Seitenbandmaterial gebildet.

Vorzugsweise sind dabei der Führungsabschnitt und das Seitenband werkstoffeinstückig ausgeführt. Der Führungsabschnitt wird durch thermische Verformung des Seitenbandes gebildet.

Das Filterelement ist besonders aufwandsgünstig herstellbar, da das Seitenband unter thermischer Verformung umgebogen wird und einen seitlich abstehenden Führungsabschnitt ausbildet. Es ist daher nicht notwendig, mehrere Teile auf ein Faltenpack, welches von einem Seitenband umschlossen wird, hinzuzufügen oder zu fixieren. Da der Führungsabschnitt aus demselben Material des Seitenbandes gefertigt ist, können einheitliche Herstellungswerkzeuge verwendet werden.

Das Seitenbandmaterial ist verdichtbar und der Führungsabschnitt wird aus verdichtetem Seitenbandmaterial gebildet. Denkbar ist beispielsweise ein Seitenbandmaterial aus einem Vlies, beispielsweise verfilztem PET. Beim thermischen Verformen kann dann ein Verschmelzen der äußeren Schichten des Vlies- oder Seitenbandmaterials erfolgen, wodurch dieses geschmeidig wird und leicht zu dem Führungsabschnitt umbiegbar ist.

Der Faltenpack weist mehrere, durch Faltungen gebildete Faltenabschnitte auf, welche durch eine Verklebung mit dem Seitenband fixiert sind. Das Faltenpack kann dabei mit Aktivkohle benetzt werden, um eine zusätzliche Adsorptionswirkung zu erzielen. Um die Faltung weiter zu stabilisieren ist auch denkbar, das Vliesmaterial zu erhitzen und dadurch gefaltet zu fixieren.

Eine bevorzugte Ausführungsform des Filterelementes weist zwei Seitenbandteile mit einem jeweiligen Führungsabschnitt auf, zwischen denen das Faltenpack fixiert ist. Diese Ausführungsform erfordert lediglich drei einzelne Elemente, die im Herstellungsverfahren zusammengefügt werden.

Der Führungsabschnitt ist durch thermische Verformung und/oder Verdichtung derart versteift, dass das Filterelement durch den einen oder mehrere Führungsabschnitte auf einer Auflage eines Filterhalters tragbar ist. Die Führungsabschnitte dienen dazu, das gesamte Filterelement, beispielsweise in einem Gehäuse festzuhalten.

Das Faltenpack hat zum Beispiel eine Höhe parallel zu einer Durchströmrichtung, und das Seitenband weist einen Halteabschnitt mit einer Breite, die der Höhe entspricht, auf, wobei der Führungsabschnitt einen nicht verschwindenden Winkel mit dem Halteabschnitt bildet. Vorzugsweise steht der Führungsabschnitt im Wesentlichen senkrecht zu dem Seitenband bzw. Halteabschnitt ab.

Ein Filterelement kann mit folgendem Verfahren hergestellt werden.

Dabei wird ein Faltenpack mit einem Seitenband aus einem thermisch verformbaren Seitenbandmaterial zumindest teilweise fixiert. Das Seitenbandmaterial wird zum Ausbilden eines seitlich von dem Filterelement abstehenden Führungsabschnitts thermisch verformt.

Ein entsprechendes Verfahren lässt sich aufwandsgünstig implementieren. Beispielsweise kann das thermische Verformen mittels Wärmestrahlung und eventuell zusätzlichem Druck auf einen Abschnitt des Seitenbandes erfolgen. Die thermische Verformung kann auch gleichzeitig durch Verbiegen des Seitenbandmaterials zu dem Führungsabschnitt unterstützt werden. Andere Verfahren unter Einsatz von Heißluft, Ultraschall, Vibrationen oder Licht z.B. sichtbar oder infrarot, sind denkbar.

In einer Variante des Herstellungsverfahrens erfolgt das thermische Verformen des Seitenbandmaterials durch Wärmezufuhr und gleichzeitiges Verdichten des Seitenbandmaterials. Ein ähnlicher Prozess erfolgt beispielsweise beim Bügeln eines Vlies- oder Filzmaterials mit einem heißen Bügeleisen.

In einer weiteren Variante des Verfahrens wird zunächst das Faltenpack mit einem Halteabschnitt des Seitenbandes verklebt. Dann wird zum Ausbilden des Führungsabschnitts mit einer erhitzten Walze und einer Auflagefläche durch thermisches Verformen und Verdichten ein an den Halteabschnitt angrenzender Abschnitt des Seitenbandes zum Ausbilden des Führungsabschnitts abgebogen. Denkbar ist beispielsweise das thermische Verformen, Verdichten und Verbiegen in einer Fließbandfertigung.

Weitere vorteilhafte Ausgestaltungen und Weiterbildungen der Erfindung sind Gegenstand der Unteransprüche sowie der im Folgenden beschriebenen Ausführungsbeispiele.

### Kurze Beschreibung der Zeichnungen

Die Erfindung wird nachfolgend ferner anhand mehrerer Ausführungsbeispiele unter Bezugnahme auf die beigelegten Figuren näher erläutert. Es zeigt dabei:

Fig.1: eine perspektivische Ansicht eines ersten Ausführungsbeispiels eines erfindungsgemäßen Filterelementes;

Fig. 2: eine perspektivische Ansicht eines zweiten Ausführungsbeispiels eines erfindungsgemäßen Filterelementes in einer Aufnahme;

Fig. 3: mögliche Formen von thermisch verformten Seitenbandmaterialien; und

Fig. 4: eine perspektivische Ansicht des ersten Ausführungsbeispiels eines erfindungsgemäßen Filterelementes während der Herstellung.

In den Figuren sind gleiche oder funktionsgleiche Elemente, sofern nichts anderes angegeben ist, mit denselben Bezugszeichen versehen worden.

### Ausführungsform(en) der Erfindung

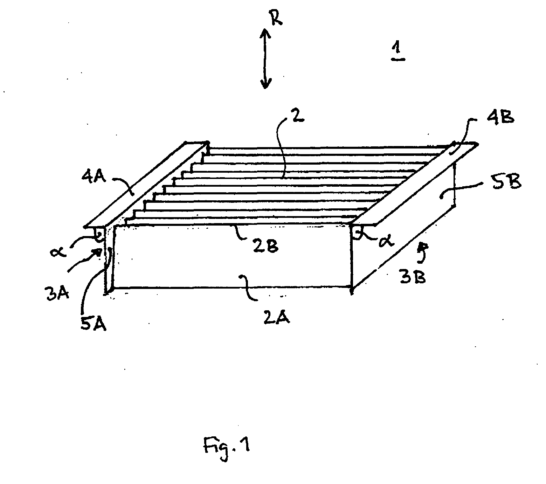

In der Figur 1 ist eine perspektivische Darstellung eines ersten Ausführungsbeispiels für ein Filterelement dargestellt. Dazu ist zunächst ein Faltenpack 2 vorgesehen, das aus ziehharmonikaförmig gefalteten Faltenabschnitten 2A gebildet ist, welche durch die jeweiligen Faltkanten 2B begrenzt sind. Der Pfeil R deutet eine mögliche Durchströmrichtung durch das Faltenpack an. In der Figur 1 ist lediglich der stirnseitig sichtbare Faltenabschnitt 2A und eine Faltkante 2B mit Bezugszeichen versehen worden. Seitlich wird das Faltenpack 2 durch zwei Seitenbandteile 3A, 3B fixiert. Es kann beispielsweise eine Verklebung zwischen dem Seitenband 3A, 3B und dem Faltenpack 2 erfolgen. Das Seitenbandmaterial ist thermisch verformbar, beispielsweise aus einem Vliesmaterial. Ein mögliches Vliesmaterial besteht aus miteinander verfilzten PET-Fasern, die bei Wärmeeinwirkung zum Beispiel anschmelzen und damit das gesamte Vliesmaterial leicht verformbar machen.

Das Seitenband weist ferner seitlich von dem gesamten Filterelement 1 abstehende Führungsabschnitte 4A, 4B auf. Die beiden Seitenbandteile 3A, 3B haben somit einen unteren Halteabschnitt 5A, 5B, mit dem die Falten des Faltenpacks 2 fixiert werden, und den Führungsabschnitt 4A, 4B, der vorzugsweise einem rechten Winkel αan dem Halteabschnitt 5A absteht. Die Verformung wird erfindungsgemäß durch Wärmezufuhr erreicht.

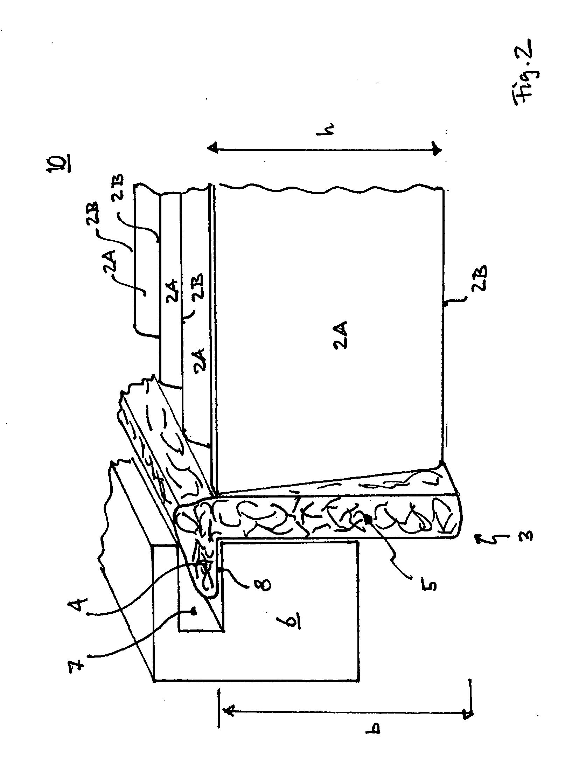

In der Figur 2 ist ein zweites Ausführungsbeispiel für ein erfindungsgemäßes Filterelement in einer perspektivischen Darstellung dargestellt. Dabei ist ein Ausschnitt gezeigt. Das Filterelement 10 weist wiederum eine Seitenband 3 mit einem Halteabschnitt 5 und einem durch thermische Verformung des Seitenbandmaterials ausgebildeten Führungsabschnitt 4 auf. Auf dem Halteabschnitt 5 sind die Falten des Faltenpacks 2 zum Beispiel aufgeklebt. Die Figur 2 zeigt mehrere Faltenabschnitte 2A, die durch die Faltungen beziehungsweise Faltenkanten 2B begrenzt sind. Durch den Winkel der Faltungen 2B ergibt sich eine Höhe h des Faltenpacks.

Der Führungsabschnitt 4 ist in eine Aufnahme 7 beispielsweise eines Gehäuses 6 eingeschoben. Durch den Führungsabschnitt wird somit das Filterelement 10 beispielsweise in dem Gehäuse fixiert. Ferner kann je nach Orientierung des eingesetzten Filterelementes 10 der Führungsabschnitt 4 derart ausgeführt sein, dass er das Gewicht des gesamten Filterelementes 10 trägt und auf der mit 8 bezeichneten Auflagefläche der Aufnahme 6 aufliegt. Der Halteabschnitt 5 hat in der in Figur 2 dargestellten Ausführungsform eine Breite b, die im Wesentlichen der Höhe h des Faltenpacks 2 entspricht.

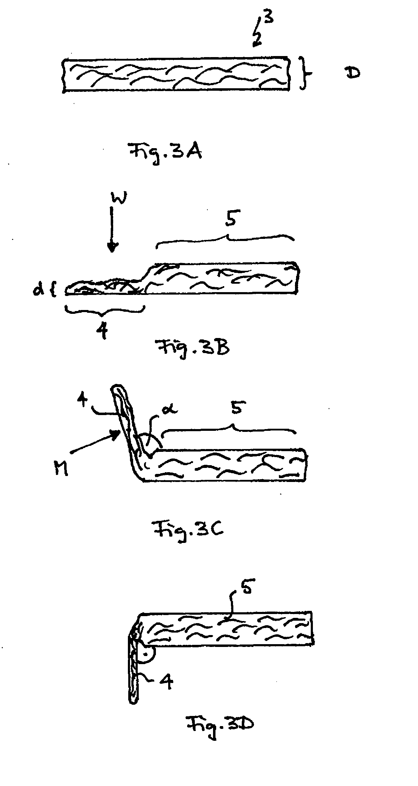

Die Figur 3 zeigt mögliche Zustände eines thermisch verformbaren Seitenbands während der Herstellung eines Filters. Die Figur 3A zeigt ein Seitenband 3. Das Seitenband ist aus einem Material aufgebaut, das thermisch verformbar ist. Dabei sind viele Materialien denkbar, beispielsweise ein Schaumstoffmaterial, miteinander verfilzte Kunststofffasern oder auch Vollkunststoff. Entsprechende Materialien werden auch als Thermoplaste bezeichnet, die sich in einem bestimmten Temperaturbereich verformen lassen. Thermoplaste lassen sich auch durch Einwirkung von Wärme und Druck miteinander verschweißen. Bekannt sind zum Beispiel Polyethylen (PE), Polystyrol (PS), Polyvinylchlorid (PVC), Polyamide (PA) oder auch Zelluloid. Aus all diesen Materialien lassen sich auch Vliesmaterialien durch Verfilzen entsprechender Fasern erzeugen.

Die in der Figur 3 dargestellten Beispiele gehen von einem Vliesmaterial aus, das eine Dicke D aufweist. Das Seitenband ist zum Beispiel zunächst als Vliesstreifen 3 vorhanden. Um den Führungsabschnitt auszubilden, wird zunächst wie in der Figur 3B dargestellt ist, unter Wärme und/oder Druckeinwirkung, was durch den Pfeil W illustriert ist, das Vliesmaterial im Bereich des Führungsabschnittes 2 erhitzt. Dadurch schmelzen beispielsweise an der Oberfläche des Seitenbandes die Fasern und verdichten das Material im Führungsabschnittbereich 4. Der entsprechende Halteabschnitt 5 wird nicht thermisch behandelt. Dadurch ergibt sich beispielsweise eine verringerte Dicke d ≤ D für den Führungsabschnitt 4. Die Wärmeeinwirkung kann beispielsweise durch Heizluft erfolgen oder aber auch gezielt durch Einstrahlung von Ultraschall, wodurch die Moleküle des Vliesmaterials zu Schwingungen angeregt werden, was sich in Wärme widerspiegelt. Ultraschall lässt sich sehr gezielt einstrahlen, sodass der Führungsabschnitt gut definiert werden kann.

Anschließend kann, wie es in der Figur 3C dargestellt ist, durch mechanischen Einwirkung M der Führungsabschnitt 4 geeignet umgebogen werden. Dabei schließt der Halteabschnitt 5 mit dem Führungsabschnitt 4 ein Winkel αein. Dieser kann vorzugsweise 90° sein. In der Figur 3D ist ebenfalls ein thermisch verformtes Seitenband mit einem Halteabschnitt 5 und einem Führungsabschnitt 4 dargestellt, wobei die Abschnitte 4, 5 einen 90°-Winkel bilden. Durch beidseitiges Anpressen des Führungsabschnitts 4 beispielsweise in der Art zweier gegeneinander gepresster Bügeleisen, kann der Führungsabschnitt 4 auch besonders flach ausgeführt werden.

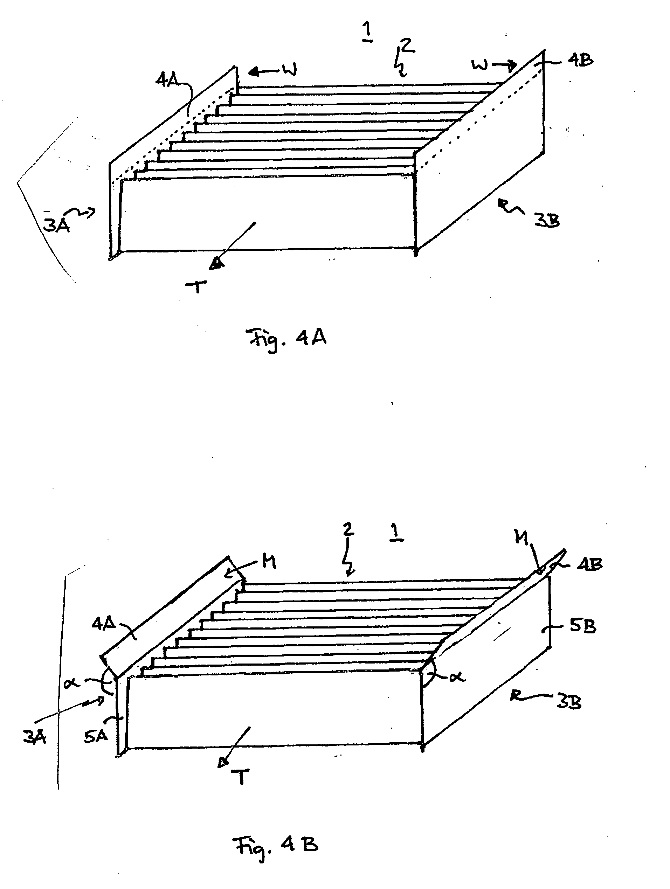

In der Figur 4 sind Zustände eines Ausführungsbeispiels eines Filterelementes während des Herstellungsverfahrens perspektivisch dargestellt. Bei der Herstellung des Filterelementes 1 wird zum Beispiel zunächst das Faltenpack 2 mit den nicht verformten Seitenbandteilen 3A, 3B verklebt und zum Beispiel auf ein Transportband gesetzt, sodass die entsprechend vorgefertigten Filterelemente 1 in einer Transportrichtung T befördert werden. Während des Transports können die als Führungsabschnitte 4A, 4B vorgesehenen Abschnitte der Seitenbandteile 3A, 3B mit Wärme W behandelt werden, beispielsweise durch Einstrahlung von Ultraschall oder Heißluft. Dies ist in der Figur 4A durch die Pfeile w angedeutet.

Nachdem das entsprechende vorgefertigte Filterelement 1 weiter transportiert wurde, kann durch mechanische Einwirkung M, wie es in der Figur 4B durch die Pfeile M angedeutet ist, der jeweilige Führungsabschnitt 4A, 4B umgebogen werden. Dies erfolgt, soweit bis ein gewünschter Winkel α, beispielsweise 90°, wie es in der Figur 1 dargestellt ist, erreicht ist. Anschließend können zum Beispiel die entsprechenden Bereiche der Seitenbänder 3A, 3B, also insbesondere die Führungsabschnitte 4A, 4B gekühlt werden, sodass eine Fixierung seitlich abstehend von dem Filterelement 1 erreicht wird.

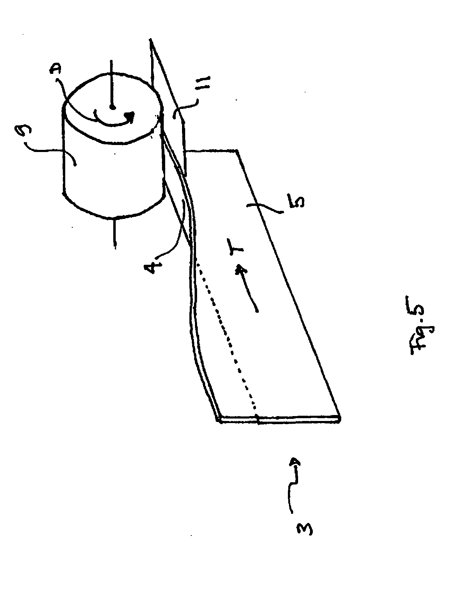

Eine Kombination von Wärme und mechanischer Einwirkung auf die Seitenbandabschnitte, welche als Führungsabschnitte 4A, 4B vorgesehen sind, kann auch durch eine erhitzte Walze oder Rolle erreicht werden, die auf den entsprechenden Führungsabschnitt 4A, 4B auf eine Auflagefläche drückt. Dies ist in der Figur 5 perspektivisch angedeutet. In der Figur 5 ist dabei lediglich das Seitenband 3 dargestellt.

Das Seitenband 3 wird in die Transportrichtung T transportiert und dabei von einer rotierenden beheizten Walze 9 auf eine Auflagefläche 11 teilweise gedrückt. Dadurch entsteht der in der Figur 5 untere Halteabschnitt 5 und der durch thermisch verformtes Seitenmaterial gebildete Führungsabschnitt 4. Es wird somit eine einfache, werkstückeinstückige Ausführung des Seitenbandes 3 mit einem Führungsabschnitt 4 und dem Halteabschnitt 5 ermöglicht. Das thermisch verformte Seitenbandmaterial ist zudem besonders stabil und ermöglicht einen sicheren Einschub in beispielsweise eine Gehäuseöffnung oder geeignete Führungsschiene.

Obwohl die vorliegende Erfindung anhand bevorzugter Ausführungsbeispiele näher erläutert wurde ist sie nicht darauf beschränkt, sondern vielfältig modifizierbar. Es können andere als die dargestellten Geometrien für Filterelemente gewählt werden. Dabei können die Gegebenheiten am Einbauort des Filters berücksichtigt werden. Es sind ferner weitere Ausführungsformen mit zum Beispiel vollständig umlaufenden Seitenbändern und Führungsabschnitten möglich. Die genannten Materialen für thermisch verformbares Seitenmaterial sind ebenfalls nur beispielhaft zu verstehen.

## Patentansprüche

1. Innenraumfilter (1) für ein Kraftfahrzeug, mit einem Faltenpack (2) und einem Seitenband (3), welches das Faltenpack (2) zumindest teilweise randseitig umläuft,
wobei das Faltenpack mehrere, durch Faltungen (2B) gebildete Faltenabschnitte aufinreist, welche durch eine Verklebung mit dem Seitenband fixiert sind, wobei das Seitenband (3) ein thermisch verformbares Seitenbandmaterial aufweist und mindestens ein seitlich von dem Filterelement (1) abstehender Führungsabschnitt (4) aus thermisch verformtem Seitenbandmaterial gebildet ist, wobei das Seitenbandmaterial ferner verdichtbar ist und der Führungsabschnitt (4) aus verdichtetem Seitenbandmaterial gebildet ist und wobei der Führungsabschnitt (4) durch thermische Verformung und /oder Verdichtung derart versteift ist, dass das Filterelement (1) durch den einen oder mehrere Führungsabschnitte (4) auf einer Auflage (8) tragbar ist.

2. Innenraumfilter (1) nach Anspruch 1, wobei zwei Seitenbandteile (3A, 3B) mit einem jeweiligen Führungsabschnitt (4A, 4B) vorgesehen sind, zwischen denen das Faltenpack (2) fixiert ist.

3. Innenraumfilter (1) nach einem der Ansprüche 1 - 2, wobei das Faltenpack (2) eine Höhe (h) parallel zu einer Durchströmungsrichtung (R), das Seitenband (3) einen Halteabschnitt (5) mit einer der Höhe (h) entsprechenden Breite (b) aufweist und der Führungsabschnitt (4) in einem nichtverschwindendem Winkel (α) von dem Halteabschnitt (5) absteht.

4. Innenraumfilter (1) nach einem der Ansprüche 1 - 3, wobei der Führungsabschnitt (4) im Wesentlichen senkrecht zu dem Seitenband (3) absteht.

5. Innenraumfilter (1) nach einem der Ansprüche 1 - 4, wobei das Seitenbandmaterial ein Vliesmaterial, insbesondere aus verfilztem PET, aufweist.

## Claims

1. Cabin air filter (1) for a motor vehicle, with a pleated pack (2) and a lateral strip (3) which surrounds at least partially the pleated pack (2) at the edges, the pleated pack featuring several folding sections formed by foldings (2B) and being fixed with the lateral strip by means of gluing, the lateral strip (3) featuring a thermally deformable lateral strip material and at least one guide section (4) formed by thermally deformed lateral strip material laterally protruding from the filter element (1), the lateral strip material being furthermore compressible and the guide section (4) being formed of compressed lateral strip material and the guide section (4) being stiffened by thermal deformation and/or compression in such a way that the filter element (1) can be supported by one or more guide sections (4) on a support (8).

2. Cabin air filter (1) according to claim 1, two lateral strip parts (3A, 3B) being provided with a respective guide section (4A, 4B) between which the pleated pack (2) is fixed.

3. Cabin air filter (1) according to one of the claims1 - 2, the pleated pack (2) featuring a height (h) parallel relative to a through-flow direction (R), the lateral strip (3) featuring a holding section (5) with a width (b) corresponding to the height (h), and the guide section (4) projecting from the holding section (5) in a non-zero angle (α).

4. Cabin air filter (1) according to one of the claims 1 -3, the guide section (4) projecting substantially perpendicular relative to the lateral strip (3).

5. Cabin air filter (1) according to one of the claims 1 - 4, the lateral strip material featuring a fleece material, in particular made of felted PET.

## Revendications

1. Filtre d'habitacle (1) pour un véhicule automobile, avec un ensemble de plis (2) et une bande latérale (3) qui encercle l'ensemble de plis (2) au moins partiellement sur les bords, l'ensemble de plis présentant plusieurs sections de plis formées par des pliages (2B) et fixées à la bande latérale par collage, la bande latérale (3) étant constituée d'un matériau de bande latérale thermoformable et au moins une section de guidage (4) faisant saillie latéralement de l'élément filtrant (1) étant constituée d'un matériau de bande latérale thermoformable, le matériau de bande latérale pouvant par ailleurs être compressé et la section de guidage (4) étant constitué d'un matériau de bande latérale thermoformable, et la section de guidage (4) étant rigidifiée par déformation thermique et/ou compression de sorte que l'élément filtrant (1) puisse être étayé par une ou plusieurs sections de guidage (4) sur un support (8).

2. Filtre d'habitacle (1) selon la revendication 1, deux pièces de la bande latérale (3A, 3B) étant pourvue d'une section de guidage (4A, 4B) respective entre laquelle l'ensemble de plis (2) est fixé.

3. Filtre d'habitacle (1) selon l'une des revendications 1 - 2, l'ensemble de plis (2) présentant une hauteur (h) parallèle à un sens d'écoulement (R), la bande latérale (3) présentant une section de maintien (5) avec une largeur (b) correspondant à la hauteur (h) et la section de guidage (4) faisant saillie de la section de maintien (5) dans un angle non nul (α).

4. Filtre d'habitacle (1) selon l'une des revendications 1 - 3, la section de guidage (4) faisant saillie essentiellement de manière verticale par rapport à la bande latérale (3).

5. Filtre d'habitacle (1) selon l'une des revendications 1 - 4, le matériau de bande latérale présentant un non-tissé, notamment constitué de PET feutré.
